# EUROPEAN PATENT APPLICATION

(11) **EP 2 172 782 A1**
(43) Date of publication of application: **07.04.2010**
(21) Application number: 08791267.1
(22) Date of filing: 17.07.2008
(51) Int. Cl.: G01N 35/10

(54) **DISPENSING DEVICE AND AUTOMATIC ANALYSIS DEVICE**

(30) Priority: 23.07.2007 JP 2007191306
(71) Applicant: Beckman Coulter, Inc., Brea, CA 92821 (US)
(72) Inventor: OGUSU, Hiroyuki, Sunto-gun, Shizuoka 4110931 (JP)
(74) Representative: Rocke, Carsten
(86) International application number: PCT/JP2008/062913
(87) International publication number: WO 2009/014062

(57) **Abstract**

First, a tip of a probe (293) is inserted into a reagent vessel to move to an initial position, and the probe (293) performs a suction operation. At this time, when the tip of the probe (293) is not in contact with a liquid surface of a reagent, the air is suctioned, and when in contact with the liquid surface, the reagent is suctioned. Subsequently, the tip of the probe (293) moves upward by a predetermined amount d. Then, the probe (293) performs a discharge operation. A discharge state of the reagent is judged by detecting a discharge pressure of the probe (293) at this time. Then, the probe (293) is moved downward in a stepwise fashion by the predetermined amount and the probe is caused to perform the suction operation and the discharge operation in each step until the probe (293) discharges the reagent. When the probe (293) discharges the reagent at the time of the discharge operation, a liquid surface position of the reagent is detected based on a lowering amount of the probe (293) from the initial position.

## Description

### TECHNICAL FIELD

The present invention relates to a dispensing device and an automatic analyzer that has the dispensing device.

### BACKGROUND ART

Conventionally, an automatic analyzer has been known, in which a specimen such as blood or the like contained in a specimen vessel and a reagent contained in a reagent vessel are dispensed in a reaction vessel and reaction caused in the reaction vessel is optically measured to analyze the specimen. In such an automatic analyzer, a liquid surface detecting device that detects a liquid surface of the specimen vessel or the reaction vessel is used for accurately performing dispensing of the specimen or the reagent. For example, a technology is known in which air is discharged using an air nozzle and a liquid surface is detected based on the change in discharge pressure (for example, see Patent Document 1).

Patent Document 1: Japanese Patent Application Laid-open No. 2003-254983

### DISCLOSURE OF INVENTION

### PROBLEM TO BE SOLVED BY THE INVENTION

However, because the liquid surface detection technology disclosed in Patent Document 1 requires devices including an air nozzle and a pump for supplying air to the air nozzle, the device cost increases.

The present invention has been made in view of the above, and an object of the present invention is to provide a liquid-surface detecting device and an automatic analyzer capable of achieving detection of a liquid surface position with a simple configuration.

### MEANS FOR SOLVING PROBLEM

To solve the problem described above and achieve the object, a dispensing device according to the present invention has a probe that suctions and discharges liquid contained in a vessel and includes a probe control unit that moves the probe downward in a stepwise fashion by a predetermined amount by controlling a lowering operation of the probe to an inside of the vessel and controls a suction operation and a discharge operation of the probe in each step; a pressure detecting unit that detects a pressure in the probe; a suction-and-discharge-state judging unit that judges a suction state or a discharge state of the liquid by the probe based on a detection result by the pressure detecting unit; and a liquid-surface detecting unit that detects a liquid surface position of the liquid based on a lowering amount of the probe when the suction-and-discharge-state judging unit judges that the probe suctions the liquid or the probe discharges the liquid.

In the dispensing device according to the present invention as set forth in the invention described above, the probe control unit moves, before the discharge operation by the probe, a tip position of the probe to a position upward of a tip position of the probe at a time of the suction operation by controlling a rising operation of the probe.

In the dispensing device according to the present invention as set forth in the invention described above, the dispensing device includes a plurality of probes that suctions and discharges liquid contained in individual vessels simultaneously, the suction-and-discharge-state judging unit judges the suction state or the discharge state of the liquid of each of the probes, and the probe control unit controls the lowering operation of each of the probes until the suction-and-discharge-state judging unit judges that all of the probes suction the liquid or the suction-and-discharge-state judging unit judges that all of the probes discharge the liquid.

An automatic analyzer according to the present invention includes the dispensing device, liquid in a vessel is dispensed into a reaction vessel by the dispensing device, and a reaction liquid that is obtained by mixing and reacting different liquids in the reaction vessel is analyzed.

In the automatic analyzer according to the present invention as set forth in the invention described above, a liquid amount in the vessel is determined based on a liquid surface position of the liquid detected by the dispensing device, and a remaining amount of the liquid in the vessel is calculated based on determined liquid amount and a liquid amount of the liquid dispensed in the reaction vessel by the dispensing device.

### EFFECT OF THE INVENTION

According to the present invention, a probe is caused to perform suction and discharge in each step while lowering the probe in a stepwise fashion by a predetermined amount with respect to the inside of a vessel, and a liquid surface position of a liquid in the vessel can be detected based on a lowering amount of the probe when it is judged that the probe suctions the liquid or the probe discharges the liquid according to the change in pressure in the probe. Typically, a reagent dispensing system is provided with a pressure sensor for detecting whether suction and discharge of a reagent by the probe are normally performed and detecting clogging of the probe. Therefore, detection of the liquid surface position can be achieved by using this pressure sensor. Thus, detection of the liquid surface position can be achieved with a simple configuration without increasing the device cost.

### BRIEF DESCRIPTION OF DRAWINGS

FIG. 1 is a schematic perspective view illustrating an example internal configuration of an automatic analyzer.
FIG. 2 is an explanatory diagram explaining suction of a reagent by a reagent dispensing system.
FIG. 3 is a schematic diagram explaining a configuration of the reagent dispensing system.
FIG. 4 is an explanatory diagram explaining a liquid-surface detecting operation.
FIG. 5 is a diagram illustrating one example of strength of a discharge pressure.
FIG. 6 is a diagram illustrating an operation flow of each unit of the reagent dispensing system in the liquid-surface detecting operation.

### EXPLANATIONS OF LETTERS OR NUMERALS

1 Automatic analyzer
- 11: Sample-rack conveying unit
- 15: Sample dispensing system
- 17: Diluted-sample rack conveying unit
- 21: Diluent dispensing system
- 23: Diluted-sample dispensing system
- 25: Plate conveying unit
- 29: Reagent dispensing system
- 291: Probe unit
- 293: Probe
- 295: Holder
- 301: Probe driving unit
- 303: Pressure detecting unit
- 303a: Pressure sensor
- 303b: Amplifier
- 303c: A/D converter
- 305: Suction and discharge system
- 305a: Syringe
- 305b: Syringe driving unit
- 307: Memory
- 307a: Reagent data
- 309: Dispensing-system control unit
- 309a: Liquid-surface detection processing unit
- 309b: Probe control unit
- 31: Reagent containing unit
- 33: Measuring unit
- 35: Plate collecting unit
- 311: Reagent vessel

### BEST MODE(S) FOR CARRYING OUT THE INVENTION

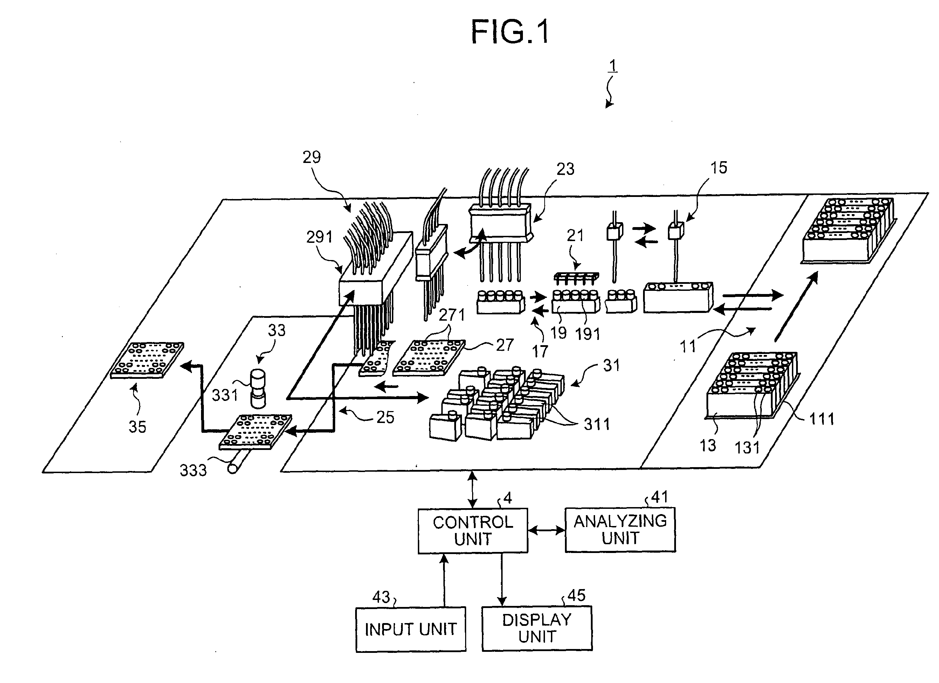

Exemplary embodiments of the present invention will be described below in detail with reference to the accompanying drawings. The present invention is not limited to the embodiments. FIG. 1 is a schematic perspective view illustrating an example internal configuration of an automatic analyzer 1 according to the present embodiment. The automatic analyzer 1 is an apparatus that performs an immunological test, such as an antigen-antibody reaction of a test blood, by using an immunological agglutination. The automatic analyzer 1 includes a sample-rack conveying unit 11, a sample dispensing system 15, a diluted-sample rack conveying unit 17, a diluent dispensing system 21, a diluted-sample dispensing system 23, a plate conveying unit 25, a reagent dispensing system 29, a reagent containing unit 31, a measuring unit 33, and a plate collecting unit 35.

The sample-rack conveying unit 11 conveys a sample rack 13, which is arranged on a rack feeder 111, under the control of a later-described control unit 4. On the sample rack 13, a plurality of sample vessels 131 containing samples (specimens) is mounted. The sample-rack conveying unit 11 sequentially moves the sample rack 13 to convey the sample vessels 131 to a predetermined sample suction position. Samples in the sample vessels 131 conveyed to the predetermined sample suction position are dispensed into diluted sample vessels 191 by the sample dispensing system 15.

The sample dispensing system 15 includes a probe that performs suction and discharge of a sample. The sample dispensing system 15 suctions a sample in the sample vessel 131, which is conveyed to the sample suction position, by the probe and transfers it to a predetermined sample discharge position under the control of the control unit 4. At the sample discharge position, a diluted sample rack 19, on which a plurality of the diluted sample vessels 191 is mounted, is placed. The sample dispensing system 15 performs dispensing by sequentially discharging the suctioned sample into each of the diluted sample vessels 191.

The diluted-sample rack conveying unit 17 conveys the diluted sample rack 19 to a predetermined diluent dispensing position and subsequently conveys it to a predetermined diluted-sample suction position under the control of the control unit 4. In each of the diluted sample vessels 191 on the diluted sample rack 19 conveyed to the diluent dispensing position, a diluent is dispensed by the diluent dispensing system 21. Then, the diluted sample in each of the diluted sample vessels 191 on the diluted sample rack 19 conveyed to the diluted-sample suction position is transferred to a predetermined diluted-sample discharge position by the diluted-sample dispensing system 23.

The diluent dispensing system 21 includes a plurality of probes that performs discharge of a diluent. The diluent dispensing system 21 dispenses a predetermined amount of a diluent by each probe into each of the diluted sample vessels 191 on the diluted sample rack 19 conveyed to the diluent dispensing position.

The diluted-sample dispensing system 23 includes a plurality of probes that performs suction and discharge of diluted samples. The diluted-sample dispensing system 23 suctions a diluted sample by each probe from each of the diluted sample vessels 191 on the diluted sample rack 19 conveyed to the diluted-sample suction position and transfers it to the diluted-sample discharge position under the control of the control unit 4. At the diluted-sample discharge position, a microplate 27, in which a plurality of reaction vessels 271 called "well" is arranged in a matrix manner, is placed. The diluted-sample dispensing system 23 performs dispensing by discharging each diluted sample into each of the reaction vessels 271 in the microplate 27.

To dispense a diluted sample and a reagent into each of the reaction vessels 271 in the microplate 27 and to perform a measurement on a mixture of the diluted sample and the reagent in each of the reaction vessels 271, the plate conveying unit 25 moves the microplate 27 at the diluted-sample discharge position to convey each of the reaction vessels 271 to a reagent discharge position. The plate conveying unit 25 subsequently conveys the microplate 27 to a measurement position under the control of the control unit 4. In the reaction vessels 271 conveyed to the reagent discharge position, a reagent is dispensed by the reagent dispensing system 29.

The reagent dispensing system 29 includes a probe unit 291 that includes a plurality of probes. Each probe performs suction and discharge of a reagent. The reagent dispensing system 29 suctions a reagent in each of reagent vessels 311 of the reagent containing unit 31 by each probe and transfers it to the reagent discharge position. The reagent dispensing system 29 discharges the reagent into the reaction vessels 271 in the microplate 27 conveyed to the reagent discharge position by the plate conveying unit 25 under the control of the control unit 4. In the reagent containing unit 31, a plurality of the reagent vessels 311 each containing a predetermined reagent that causes the antigen-antibody reaction with a sample is arranged and housed.

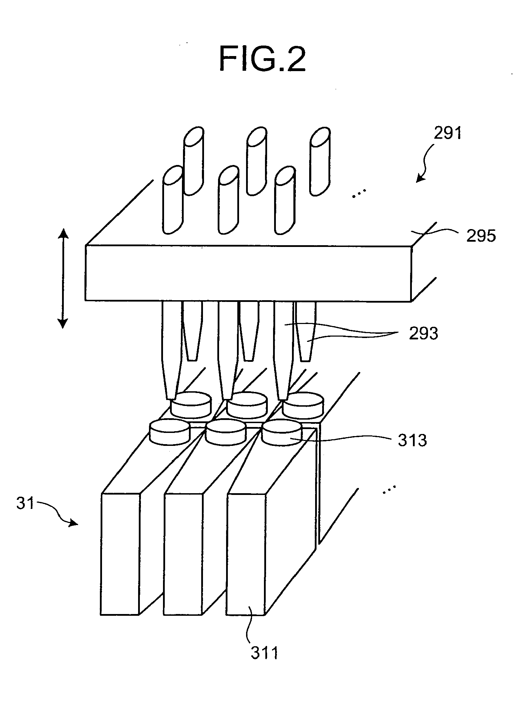

FIG. 2 is an explanatory diagram explaining suction of a reagent by the reagent dispensing system 29. As shown in FIG. 2, the probe unit 291 is configured such that a plurality of probes 293 arranged in a plurality of lines is fixed by a holder 295. In the suction of a reagent, the probe unit 291 moves to an upper position of the reagent containing unit 31 to perform an elevating operation and causes each of the probes 293 to move up and down relative to the inside of the reagent vessels 311 below. The reagent vessels 311 of the same number as the probes 293 in the probe unit 291 are housed in the reagent containing unit 31. Each of the reagent vessels 311 is housed in the reagent containing unit 31 such that the arrangement of an insertion opening 313, into which the probe 293 of the probe unit 291 is inserted at the time of the reagent suction, corresponds to the alignment of each of the probes 293 of the probe unit 291. Because each of the probes 293 suctions a reagent in the same reagent vessel 311, contamination in the dispensing needs not be considered unless the reagent vessel 311 is replaced.

Returning to FIG. 1, a diluted sample is dispensed into each of the reaction vessels 271 in the microplate 27 by the diluted-sample dispensing system 23 and a reagent is dispensed into each of the reaction vessels 271 by the reagent dispensing system 29. Upon completing the antigen-antibody reaction of the samples in the reaction vessels 271 after a necessary reaction time has passed, the microplate 27 is conveyed to the measurement position by the plate conveying unit 25. With the antigen-antibody reaction, an agglutination reaction pattern is formed on the bottom surface of each of the reaction vessels 271.

The measuring unit 33 includes an imaging unit 331, such as a CCD camera, that is provided above the measurement position and images the microplate 27 conveyed to the measurement position from above. The measuring unit 33 also includes a light source 333 that is provided below the measurement position and irradiates each of the reaction vessels 271 of the microplate 27 with irradiation light. The imaging unit 331 images the agglutination reaction pattern formed on the bottom surface of each of the reaction vessels 271 by receiving light intensity transmitted through each of the reaction vessels 271. The obtained measurement result (image information) is output to the control unit 4. Typically, agglutination of a sample and a reagent is caused if the sample is positive and agglutination of a sample and a reagent is not caused if the sample is negative.

The plate collecting unit 35 collects the microplate 27, of which measurement by the measuring unit 33 is finished. The collected microplate 27 is cleaned by a not-shown cleaning unit and is reused. Specifically, a mixture in each of the reaction vessels 271 is discharged and the microplate 27 is cleaned by discharge and suction of cleaning liquid such as detergent or cleaning water.
The microplate 27 is wasted in some cases after finishing one measurement depending on the content of the test.

The automatic analyzer 1 includes the control unit 4 that performs the overall control of the operation of the entire apparatus by controlling each unit by performing an instruction of operation timing, data transfer, and the like to each unit included in the apparatus. The control unit 4 includes a microcomputer and the like incorporating a memory that stores therein various data necessary for the operation of the automatic analyzer 1 in addition to the analysis result. The control unit 4 is arranged at an appropriate position in the apparatus. The control unit 4 is connected to an analyzing unit 41 and outputs the measurement result by the measuring unit 33 to the analyzing unit 41. The analyzing unit 41 analyzes the antigen-antibody reaction based on the measurement result by the measuring unit 33 and outputs the analysis result to the control unit 4. For example, the analyzing unit 41 performs image processing on the image information obtained by the measuring unit 33 and detects and judges the agglutination reaction pattern formed on the bottom surface of each of the reaction vessels 271. The control unit 4 is also connected to an input unit 43 that includes an input device, such as a keyboard and a mouse for inputting information necessary for analysis including the number of samples and analytical items, and a display unit 45 that includes a display device, such as an LCD or an ELD for displaying an analysis result screen, a warning screen, an input screen for inputting various settings, and the like.

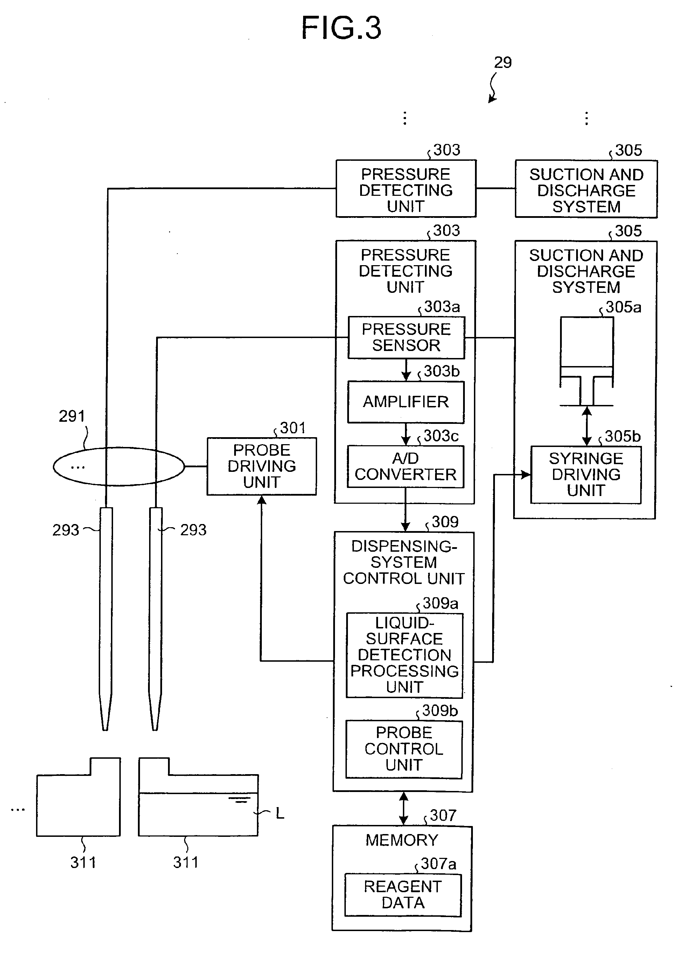

Next, the detailed configuration of the reagent dispensing system 29 is described. The reagent dispensing system 29 in the present embodiment, for example, performs a liquid-surface detecting operation for detecting a liquid-surface position of each of the reagent vessels 311 at the timing at which each of the reagent vessels 311 in the reagent containing unit 31 is replaced. FIG. 3 is a schematic diagram explaining a configuration of the reagent dispensing system 29. As shown in FIG. 3, the reagent dispensing system 29 includes a probe driving unit 301, pressure detecting units 303, suction and discharge systems 305, a memory 307, and a dispensing-system control unit 309.

The probe driving unit 301 moves the probe unit 291 including the probes 293 between the reagent discharge position and a position above the reagent containing unit 31 and moves each of the probes 293 up and down by performing the elevating operation of the probe unit 291.

The pressure detecting unit 303 is provided near the base end portion of each of the probes 293 and detects the pressure change inside the probe 293 due to the contact of the tip portion of the probe 293 with a liquid surface of a reagent L contained in the reagent vessel 311. The pressure detecting unit 303 includes a pressure sensor 303a that detects the pressure inside the probe 293, an amplifier 303b that amplifies the output from the pressure sensor 303a, and an A/D converter 303c that converts the output from the amplifier 303b into a digital signal. The output of the pressure sensor 303a is output to the dispensing-system control unit 309 via the A/D converter 303c after being amplified in the amplifier 303b. The detection result by the pressure detecting unit 303 is used for detecting clogging of the probe 293 by judging a suction state by the probe 293 in addition to the liquid-surface detecting operation in the present embodiment.

The suction and discharge system 305 is connected to each of the probes 293 via the pressure sensor 303a, and suctions and discharges the reagent L in the reagent vessel 311. The suction and discharge system 305 includes a syringe 305a that has a cylinder and a piston and a syringe driving unit 305b that controls a suction and discharge operation by the syringe 305a.

The memory 307 is realized by various IC memories such as a ROM, such as an flash memory capable of updating and storing, and a RAM, and stores therein various data necessary for the operation of the reagent dispensing system 29. The memory 307 stores therein reagent data 307a storing a remaining amount of a reagent while correlated with a vessel ID of each of the reagent vessels 311 housed in the reagent containing unit 31.

The dispensing-system control unit 309 includes a CPU and the like, and controls the operation of each unit included in the reagent dispensing system 29 under the control of the control unit 4. The dispensing-system control unit 309 controls the probe driving unit 301 to control the movement and the elevating operation of the probe unit 291. The dispensing-system control unit 309 controls each of the syringe driving units 305b to cause the corresponding syringe 305a to perform the suction and discharge operation and causes each of the probes 293 to suction and discharge the reagent L in the reagent vessel 311, thereby dispensing the reagent in each of the reaction vessels 271 of the microplate 27. At this time, the dispensing-system control unit 309 moves the probe unit 291 downward so that the tip of each of the probes 293 is positioned near the bottom surface of the reagent vessel 311 and performs the suction of the reagent L. Then, the dispensing-system control unit 309 newly calculates a remaining amount in each of the reagent vessels 311 by subtracting an amount of suctioned reagent from the remaining amount of each of the reagent vessels 311 stored in the reagent data 307a, and updates the reagent data 307a.

The dispensing-system control unit 309 includes a liquid-surface detection processing unit 309a that detects the liquid-surface position of the reagent L in the reagent vessels 311 and a probe control unit 309b that controls the elevating operation of the probe unit 291 by the probe driving unit 301 in the liquid-surface detecting operation and also controls the suction operation and the discharge operation of the probes by the syringe driving units 305b.

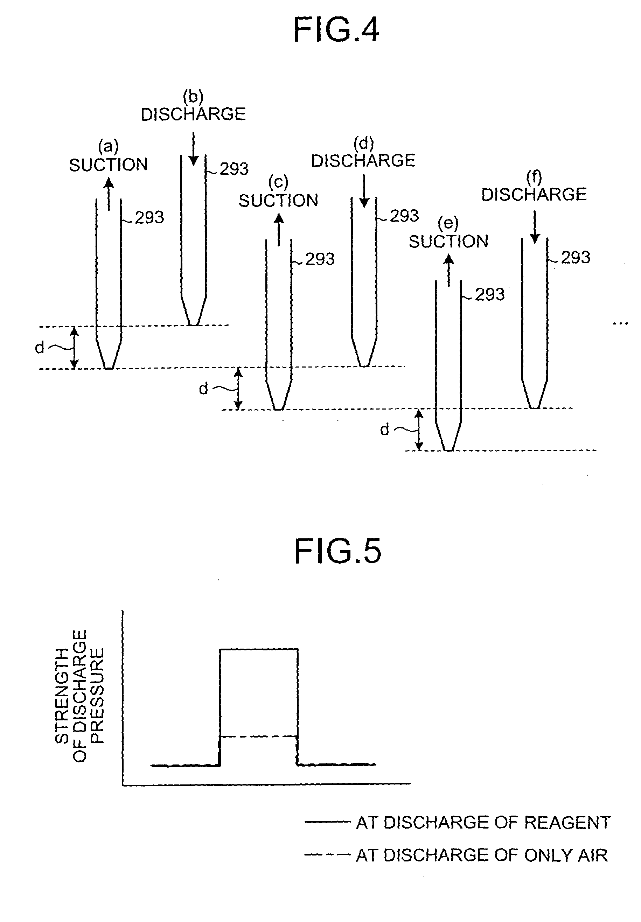

FIG. 4 is an explanatory diagram explaining the liquid-surface detecting operation according to the present embodiment. In the liquid-surface detecting operation in the present embodiment, first, as shown in (a) in FIG. 4, the tip of the probe 293 is inserted into the reagent vessel 311 by the lowering operation of the probe unit 291 to move to an initial position. The initial position is set in advance based on an approximate height of the liquid surface of a reagent contained in the reagent vessel 311 before unsealed. Then, the probe 293 performs the suction operation by the suction and discharge operation of the syringe 305a. At this time, the probe 293 suctions the air when the tip thereof is not in contact with the liquid surface and suctions the reagent when the tip thereof is in contact with the liquid surface.

Next, as shown in (b) in FIG. 4, the tip of the probe 293 moves upward by a predetermined amount d by the rising operation of the probe unit 291. Then, the probe 293 performs the discharge operation by the suction and discharge operation of the syringe 305a, and the discharge state of the reagent is judged by detecting the discharge pressure of the probe 293 at this time. In other words, when the tip of the probe 293 is not in contact with the liquid surface of the reagent at the initial position in (a) in FIG. 4, only the air is discharged by the discharge operation in (b) in FIG. 4. In contrast, when the tip of the probe 293 is in contact with the liquid surface of the reagent at the initial position in (a) in FIG. 4 and the regent is suctioned by the suction operation, the reagent is discharged by the discharge operation in (b) in FIG. 4, so that the change in the discharge pressure in the probe 293 is different from the case of discharging only the air. FIG. 5 is a diagram illustrating one example of strength of the discharge pressure when a reagent is discharged and strength of the discharge pressure when only the air is discharged, in which the change in the discharge pressure when the reagent is discharged is denoted by a solid line, and the change in the discharge pressure when only the air is discharged is denoted by a dashed-dotted line. The discharge condition (presence or absence of discharge) of a reagent by the probe 293 can be judged based on the difference of the change in the discharge pressure.

The downward movement and the suction operation of the probe 293 and the upward movement and the discharge operation of the probe 293 are repeated little by little until the probe 293 discharges a reagent, and detects the liquid surface position while moving the probe 293 downward in a stepwise fashion by the predetermined amount d. As shown in (c) in FIG. 4, the tip of the probe 293 moves downward to the position lower than the last suction position ((a) in FIG. 4) by the predetermined amount d by the lowering operation of the probe unit 291, and the probe 293 performs the suction operation by the suction and discharge operation of the syringe 305a. Next, as shown in (d) in FIG. 4, the tip of the probe 293 moves upward by the predetermined amount d by the rising operation of the probe unit 291 and the probe 293 performs the discharge operation by the suction and discharge operation of the syringe 305a. If the probe 293 does not discharge the reagent at the time of this discharge operation, as shown in (e) in FIG. 4, the tip of the probe 293 is further moved downward to the position lower than the last suction position ((c) in FIG. 4) by the predetermined amount d and the probe 293 performs the suction operation. Next, as shown in (f) in FIG. 4, the tip of the probe 293 moves upward by the predetermined amount d and the probe 293 performs the discharge operation. If the probe 293 discharges the reagent at the time of the discharge operation, the tip position of the probe 293 at the time of the suction operation is detected as the liquid surface position of the reagent.

The rising operation of the probe unit 291 is performed before the discharge operation in order to always perform the discharge operation of the probe 293 in the air. The discharge pressure is different between the case of performing the discharge operation in the state where the tip of the probe 293 is in contact with the liquid surface and a case of performing the discharge operation in the air, so that the detection accuracy of the liquid surface detection can be kept constant by moving the tip of the probe 293 to the air in this manner. The probe 293 is not necessarily required to be moved upward by performing the rising operation of the probe unit 291; however, it is preferable because the detection accuracy of the liquid surface detection can be maintained to the detection accuracy in the discharge detection during analyzing. The lowering amount and the rising amount of the probe 293 need not be the same.

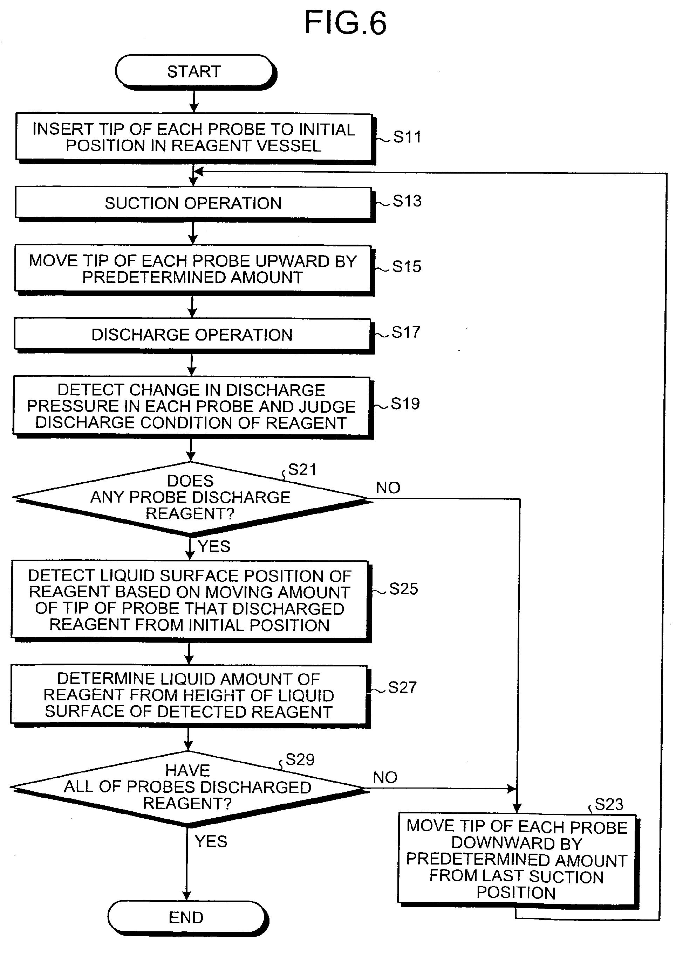

Next, the control procedure of the dispensing-system control unit 309 in the liquid-surface detecting operation by the reagent dispensing system 29 is explained. FIG. 6 is a diagram illustrating an operation flow of each unit of the reagent dispensing system 29 in the liquid-surface detecting operation. First, the probe control unit 309b controls the probe driving unit 301 to perform the lowering operation of the probe unit 291 to thereby insert the tip of each of the probes 293 to the initial position in the reagent vessel 311 (Step S11). Then, the probe control unit 309b controls the syringe driving unit 305b of each of the suction and discharge systems 305 to cause each of the probes 293 to perform the suction operation (Step S13).

Next, the probe control unit 309b controls the probe driving unit 301 to perform the rising operation of the probe unit 291 to thereby move the tip of each of the probes 293 upward by a predetermined amount (Step S15). Then, the probe control unit 309b controls the syringe driving unit 305b of each of the suction and discharge systems 305 to cause each of the probes 293 to perform the discharge operation (Step S17).

Next, the liquid-surface detection processing unit 309a detects the change in the discharge pressure in each of the probes 293 based on the detection result input from the pressure detecting unit 303 of each of the probes 293 at the time of the discharge operation at Step S17, and judges the discharge condition of a reagent (Step S19). When it is judged that the reagent is discharged from any of the probes based on the change in the discharge pressure of each of the probes 293 at the time of the discharge operation (Yes at Step S21), the liquid-surface detection processing unit 309a proceeds to Step S25. In contrast, when it is judged that the reagent is not discharged from any of the probes 293 (No at Step S21), the liquid-surface detection processing unit 309a proceeds to Step S23. Then, the probe control unit 309b controls the probe driving unit 301 to perform the lowering operation of the probe unit 291 to thereby move the tip of each of the probes 293 downward to the position lower than the last suction position by a predetermined amount, and returns to Step S13.

At Step S25, the liquid-surface detection processing unit 309a detects the liquid surface position of the reagent based on the lowering amount of the tip position of the probe 293 from the initial position when it is judged that the reagent is discharged, i.e., the lowering amount of the probe unit 291 from the initial position. Then, the liquid-surface detection processing unit 309a determines the liquid amount of the reagent in the reagent vessel 311 from the height of the liquid surface of the detected reagent and stores it in the reagent data 307a of the memory 307 while correlating it with the vessel ID thereof (Step S27).

When all of the probes 293 discharge the reagent and the liquid amount of the reagent is determined for all of the reagent vessels 311 in the reagent containing unit 31 (Yes at Step S29), the process ends. In contrast, when there is the probe 293 that has not discharged the reagent (No at Step S29), the system control proceeds to Step S23. In the process after proceeding to Step S23, the dispensing-system control unit 309 does not control the syringe driving units 305b of the suction and discharge systems 305 for the probes 293 that are judged to have already discharged the reagent at Step S19 and does not cause the probes 293 to perform the suction operation and the discharge operation.

As explained above, according to the present embodiment, the probes are moved downward in a stepwise fashion by a predetermined amount and the probes are caused to perform the suction operation and the discharge operation to judge the discharge condition of a reagent based on the change in the discharge pressure in the probes, thereby enabling to detect the liquid surface position of the reagent. It is possible to use a pressure sensor to detect the change in the discharge pressure in the probes, which is conventionally provided in a reagent dispensing system for detecting whether suction and discharge of the reagent by the probes are normally performed and detecting clogging of the probes. Accordingly, it is not needed to provide devices such as an air nozzle that is conventionally needed for detecting the liquid surface, a pump for supplying air to the air nozzle, and the like. Thus, detection of the liquid surface position can be achieved with a simple configuration without increasing the cost of the device.

Incidentally, a liquid-surface detecting device that detects the liquid surface position by detecting the change in capacitance of the liquid surface in a vessel is conventionally known, which is useful because of the low contamination of a reagent. However, in the configuration in which a plurality of probes arranged close to each other performs suction and discharge simultaneously as in the reagent dispensing system in the present embodiment, liquid-surface detection signals of the change in capacitance interfere between adjacent probes, and therefore it is impossible to detect the liquid surface position stably. On the contrary, in the present embodiment, the liquid surface position can be detected based on whether each probe discharges a reagent, so that interference of liquid surface detection signals does not need to be considered even with the configuration in which a plurality of probes performs suction and discharge simultaneously, and detection of the liquid surface position can be achieved with a simple configuration.

In the above embodiment, the liquid surface position is detected by detecting the change in pressure in the probe at the time of the discharge operation and judging the discharge condition of a reagent; however, the configuration can be such that the discharge condition (presence or absence) of a reagent is judged based on the change in pressure in the probe at the time of the suction operation, and the liquid surface position of the reagent can be detected based on the lowering amount of the probe when it is judged that the probe suctions the reagent.

In the above embodiment, it is explained that the reagent dispensing system has a configuration including a plurality of probes; however, the number of probes included in the reagent dispensing system can be one, with which the liquid surface position can be detected in the similar manner.

Furthermore, in the above embodiment, the liquid-surface detecting operation for detecting the liquid surface position of each of the reagent vessels 311 is performed at the timing at which each of the reagent vessels 311 in the reagent containing unit 31 is replaced; however, it is also possible to perform the liquid-surface detecting operation on each of the reagent vessels 311 before the analysis process and detect a remaining amount of a reagent. Moreover, it is also possible to judge the number of samples that can be analyzed based on the liquid amount of a reagent in reagent vessels detected by the liquid-surface detecting operation and cause the display unit 45 to display it to a user.

Moreover, the automatic analyzer in the present invention is not limited to an apparatus that performs the immunological test, and can be applied to an automatic analyzer that performs a biochemical analysis of a specimen, a blood transfusion test, or the like in the similar manner.

### INDUSTRIAL APPLICABILITY

As described above, the dispensing device and the automatic analyzer of the present invention are useful for achieving detection of a liquid surface position of liquid contained in a vessel with a simple configuration.

## Claims

1. A dispensing device that includes a probe that suctions and discharges liquid contained in a vessel, the dispensing device comprising:
a probe control unit that moves the probe downward in a stepwise fashion by a predetermined amount by controlling a lowering operation of the probe to an inside of the vessel and controls a suction operation and a discharge operation of the probe in each step;
a pressure detecting unit that detects a pressure in the probe;
a suction-and-discharge-state judging unit that judges a suction state or a discharge state of the liquid by the probe based on a detection result by the pressure detecting unit; and
a liquid-surface detecting unit that detects a liquid surface position of the liquid based on a lowering amount of the probe when the suction-and-discharge-state judging unit judges that the probe suctions the liquid or the probe discharges the liquid.

2. The dispensing device according to claim 1, wherein the probe control unit moves, before the discharge operation by the probe, a tip position of the probe to a position upward of a tip position of the probe at a time of the suction operation by controlling a rising operation of the probe.

3. The dispensing device according to claim 1, wherein
the dispensing device includes a plurality of the probes that suctions and discharges liquid contained in individual vessels simultaneously,
the suction-and-discharge-state judging unit judges the suction state or the discharge state of the liquid of each of the probes, and
the probe control unit controls the lowering operation of each of the probes until the suction-and-discharge-state judging unit judges that all of the probes suction the liquid or the suction-and-discharge-state judging unit judges that all of the probes discharge the liquid.

4. An automatic analyzer comprising the dispensing device according to any one of claims 1 to 3, wherein
liquid in a vessel is dispensed into a reaction vessel by the dispensing device, and
a reaction liquid that is obtained by mixing and reacting different liquids in the reaction vessel is analyzed.

5. The automatic analyzer according to claim 4, wherein
a liquid amount in the vessel is determined based on a liquid surface position of the liquid detected by the dispensing device, and
a remaining amount of the liquid in the vessel is calculated based on determined liquid amount and a liquid amount of the liquid dispensed in the reaction vessel by the dispensing device.
